# EUROPÄISCHE PATENTANMELDUNG

(11) **EP 4 707 034 A1**
(43) Veröffentlichungstag der Anmeldung: **11.03.2026**
(21) Anmeldenummer: 25199229.3
(22) Anmeldetag: 29.08.2025
(51) Int. Cl.: B60L 3/12, B60L 15/20, G05B 13/02, G05B 17/02, G06N 3/044, H02P 29/60

(54) **REGELVERFAHREN, REGELSYSTEM, COMPUTERPROGRAMMPRODUKT UND COMPUTERLESBARES MEDIUM**

(30) Priorität: 04.09.2024 DE 102024208399
(71) Anmelder: VOLKSWAGEN AG, 38440 Wolfsburg (DE)
(72) Erfinder: Wiese, Niels, 38440 Wolfsburg (DE); Gronwald, Peer-Ole, 38440 Wolfsburg (DE)

(57) **Zusammenfassung**

Die vorliegende Erfindung betrifft ein Regelverfahren (200) zum Regeln einer elektrischen Antriebsvorrichtung (110) durch ein Regelsystem (10) mit einem Kraftfahrzeug (100), das Regelverfahren (200) umfassend:
- Berechnen (202) zumindest eines Eingangs-Parameters (EP) der elektrischen Antriebsvorrichtung (110) mittels eines rekurrenten neuronalen Netzwerks (RNN) einer ersten Logikvorrichtung (12) des Regelsystems (10),
- Berechnen (204) von zumindest einer Betriebs-Kenngröße (BK) der elektrischen Antriebsvorrichtung (110) auf Grundlage des zumindest einen theoretischen Eingangs-Parameters (EP) mittels eines vorwärtsgerichteten neuronalen Netzwerks (FNN) einer zweiten Logikvorrichtung (102) des Kraftfahrzeugs (100) des Regelsystems (10),
- Regeln (206) der elektrischen Antriebsvorrichtung (110) durch eine Regelvorrichtung (104) des Kraftfahrzeugs (100) auf Grundlage der berechneten zumindest einen Betriebs-Kenngröße (BK).

Ferner betrifft die Erfindung ein Regelsystem (10), umfassend eine erste Logikvorrichtung (12) und ein Kraftfahrzeug (100) mit einer zweiten Logikvorrichtung (102) und einer Regelvorrichtung (104) zum Ausführen des Regelverfahrens (200) sowie ein Computerprogrammprodukt (300) und ein computerlesbares Medium (400).

## Beschreibung

Die vorliegende Erfindung betrifft ein Regelverfahren zum Regeln einer elektrischen Antriebsvorrichtung durch ein Regelsystem mit einem Kraftfahrzeug. Ferner betrifft die Erfindung ein Regelsystem mit einem Kraftfahrzeug zum Ausführen des Regelverfahrens.

Die derzeitig öffentlich bekannten Kraftfahrzeuge werden zunehmend mit elektrischen Antriebsvorrichtungen angetrieben. Die Leistung der elektrischen Antriebsvorrichtungen wird maßgeblich von einer vorteilhaften Wissensgrundlage über die Leistungsfähigkeit der elektrischen Antriebsvorrichtungen und eine vorteilhafte Regelung der elektrischen Antriebsvorrichtungen zum zustandsabhängigen Nutzung der vorhandenen Leistungspotentiale einer elektrischen Antriebsvorrichtung bestimmt.

Bekannte elektrische Antriebsvorrichtungen sind zumeist in deren Leistungsfähigkeit mittels einer grundsätzlichen konstruktiven Auslegung, einer Auslegung für Temperaturgrenzwerte und/oder einer Auslegung auf eine angestrebte Mindest-Lebensdauert limitiert.

Eine tatsächliche Zustandserfassung der elektrischen Antriebsvorrichtungen in einem Kraftfahrzeug ist zumeist nicht möglich, da eine Vielzahl an Messvorrichtungen nötig wäre und ein entsprechender Messaufwand und/oder ein Rechenaufwand von den bekannten Kraftfahrzeugen zumeist nicht oder zumindest nicht kosteneffizient ermöglicht werden kann.

Bekannte Steuerverfahren greifen zumeist auf Messdaten der elektrischen Antriebsvorrichtungen während des Betriebs der elektrischen Antriebsvorrichtungen zu und regeln die elektrischen Antriebsvorrichtungen anhand der Messdaten. Einfachere Ausgestaltungen von Kraftfahrzeugen erfassen die Leistungsfähigkeit einer elektrischen Antriebsvorrichtung in einer Entwicklungs- und/oder Konstruktionsphase und regeln die elektrische Antriebsvorrichtung anschließend statisch anhand der initial erfassten Leistungsfähigkeit.

Aus der Druckschrift CN 115 276 488 A ist ein Verfahren und System zum Bestimmen eines Motorzustands, insbesondere einer Temperatur, und zum Regeln des Motors bekannt.

Nachteilig ist den bekannten Kraftfahrzeugen und Regelverfahren für elektrischen Antriebsvorrichtungen gemein, dass die Leistungsfähigkeit der elektrischen Antriebsvorrichtungen nicht optimal genutzt wird und/oder ein hoher Messaufwand und/oder Rechenaufwand in den Kraftfahrzeugen notwendig ist, um eine annähernd aktuelle Zustandserfassung der elektrischen Antriebsvorrichtungen im Kraftfahrzeug zu ermöglichen.

Es ist daher Aufgabe der vorliegenden Erfindung, die oben beschriebenen Nachteile im Stand der Technik zu beheben oder zumindest teilweise zu beheben. Insbesondere ist es Aufgabe der Erfindung, ein Regelverfahren bereitzustellen, mit dem ein Regeln einer elektrischen Antriebsvorrichtung durch ein Regelsystem mit einem Kraftfahrzeug besonders einfach ermöglicht wird. Insbesondere ist es ferner die Aufgabe der Erfindung ein Regelsystem, ein Computerprogrammprodukt sowie ein computerlesbares Medium zum Regeln einer elektrischen Antriebsvorrichtung eines Kraftfahrzeugs bereitzustellen.

Die voranstehende Aufgabe wird durch die Patentansprüche gelöst. Insbesondere wird die Aufgabe gelöst durch ein Regelverfahren zum Regeln einer elektrischen Antriebsvorrichtung durch ein Regelsystem mit einem Kraftfahrzeug mit den Merkmalen des unabhängigen Anspruchs 1. Ferner wird die Aufgabe gelöst durch ein Regelsystem mit einem Kraftfahrzeug zum Ausführen des Regelverfahrens mit den Merkmalen des unabhängigen Anspruchs 10, durch ein Computerprogrammprodukt mit den Merkmalen des unabhängigen Anspruchs 11 sowie durch ein computerlesbares Medium mit den Merkmalen des unabhängigen Anspruchs 12. Weitere Vorteile und Details der Erfindung ergeben sich aus den Unteransprüchen, der Beschreibung und den Zeichnungen. Dabei gelten Merkmale, die im Zusammenhang mit dem erfindungsgemäßen Regelverfahren beschrieben sind, selbstverständlich auch im Zusammenhang mit dem erfindungsgemäßen Regelsystem, dem erfindungsgemäßen Computerprogrammprodukt, dem erfindungsgemäßen computerlesbares Medium und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe gelöst durch ein Regelverfahren zum Regeln einer elektrischen Antriebsvorrichtung durch ein Regelsystem mit einem Kraftfahrzeug, das Regelverfahren umfasst:
- Berechnen zumindest eines Eingangs-Parameters der elektrischen Antriebsvorrichtung mittels eines rekurrenten neuronalen Netzwerks einer ersten Logikvorrichtung des Regelsystems,
- Berechnen von zumindest einer Betriebs-Kenngröße der elektrischen Antriebsvorrichtung auf Grundlage des zumindest einen theoretischen Eingangs-Parameters mittels eines vorwärtsgerichteten neuronalen Netzwerks einer zweiten Logikvorrichtung des Kraftfahrzeugs des Regelsystems,
- Regeln der elektrischen Antriebsvorrichtung durch eine Regelvorrichtung des Kraftfahrzeugs auf Grundlage der berechneten zumindest einen Betriebs-Kenngröße.

Die zuvor und die im Nachfolgenden beschriebenen Verfahrensschritte können bevorzugt, wenn nicht explizit anderweitig angegeben, einzeln, zusammen, einfach, mehrfach, zeitlich parallel und/oder nacheinander in beliebiger Reihenfolge ausgeführt werden. Eine Benennung als beispielsweise "erster Verfahrensschritt" und "zweiter Verfahrensschritt" bedingt keine zeitliche Reihenfolge und/oder Priorisierung. Eine bevorzugte Reihenfolge der Verfahrensschritte sieht vor, dass die Verfahrensschritte in der aufgeführten Reihenfolge ausgeführt werden.

Die elektrische Antriebsvorrichtung ist bevorzugt permanent erregte Synchronmaschine oder als fremderregte Antriebsmaschine zum Antrieb des Kraftfahrzeugs zu verstehen. Die elektrische Antriebsvorrichtung ist bevorzugt als Synchronmaschine und/oder als Asynchronmaschine ausgestaltet.

Das Berechnen des zumindest eines Eingangs-Parameters erfolgt mittels des rekurrenten neuronalen Netzwerks. Bevorzugt erfolgt das Berechnen des zumindest eines Eingangs-Parameters zusätzlich oder alternativ mittels einer Convolutional Schicht. Die Convolutional Schicht ist bevorzugt in dem rekurrenten neuronalen Netzwerk integriert. Das rekurrente bzw. rückgekoppelte neuronale Netzwerk oder "recurrent neural network" ist bevorzugt als ein neuronales Netzwerk zu verstehen, dass sich im Gegensatz zu dem vorwärtsgerichteten neuronalen Netzwerk oder "feedforward neural network" durch Verbindungen von Neuronen einer Schicht zu Neuronen derselben oder einer vorangegangenen Schicht auszeichnet. Anschaulich und beispielhaft formuliert betrachtet das rekurrente neuronale Netzwerk zeitliche Zusammenhänge und/oder zeitliche Sequenzen.

Das rekurrente neuronale Netzwerk verwendet für das Berechnen des zumindest einen Eingangs-Parameters bevorzugt Antriebs-Parameter, die durch Offline-Simulationen eines thermischen Netzwerks, insbesondere eines lumped parameter themal networks, und/oder durch Messungen für das Training bereitgestellt werden.

Das rekurrente neuronale Netzwerk dient im Rahmen der Erfindung bevorzugt dem Training der Eingangs-Parameter für das vorwärtsgerichtete neuronale Netzwerk. Das Berechnen des zumindest eines Eingangs-Parameters erfolgt bevorzugt zeitlich vorab zu einer Serien-Inbetriebnahme der elektrischen Antriebsvorrichtung und/oder des Kraftfahrzeugs. Das Übertragen des zumindest einen Eingangs-Parameters an das Kraftfahrzeug, insbesondere an die zweite Logikvorrichtung, erfolgt bevorzugt einmalig oder zumindest nur in Intervallen und/oder nicht permanent.

Das vorwärtsgerichtete neuronale Netzwerk betrachtet anschaulich beschrieben bevorzugt jeweils einen, insbesondere ausschließlich einen, zeitlichen Datensatz nach dem anderen.

Das Berechnen der zumindest einen Betriebs-Kenngröße erfolgt durch eine zweite Logikvorrichtung des Kraftfahrzeugs mittels des vorwärtsgerichteten neuronalen Netzwerks. Bevorzugt erfolgt das Berechnen der zumindest eines Betriebs-Kenngröße zusätzlich oder alternativ mittels einer Convolutional Schicht. Die Convolutional Schicht ist bevorzugt in dem vorwärtsgerichteten neuronalen Netzwerk integriert. Das Berechnen der zumindest einen Betriebs-Kenngröße erfolgt bevorzugt während des Betriebs des Kraftfahrzeugs, insbesondere in Echtzeit. Das Berechnen der zumindest einen Betriebs-Kenngröße erfolgt auf Grundlage des vorab berechneten zumindest einen Eingangs-Parameters.

Das Regeln der elektrischen Antriebsvorrichtung erfolgt daraufhin durch eine Regelvorrichtung des Kraftfahrzeugs auf Grundlage der berechneten zumindest einen Betriebs-Kenngröße.

Das erfindungsgemäße Regelverfahren ist somit besonders vorteilhaft, da durch den ersten Verfahrensschritt ein großer Rechenaufwand auf die erste Logikvorrichtung und das rekurrente neuronale Netzwerk ausgelagert wird. Das Kraftfahrzeug kann somit effizienter die zumindest eine Betriebs-Kenngröße berechnen und die elektrische Antriebsvorrichtung regeln. Das Kraftfahrzeug erfordert folglich eine geringere Rechenleistung und/oder kann mit gleicher Rechenleistung das Berechnen der zumindest einen Betriebs-Kenngröße und/oder das Regeln der elektrischen Antriebsvorrichtung vorteilhaft verbessern.

Die vorteilhafte Aufteilung des erfindungsgemäßen Regelverfahrens in ein rekurrentes neuronales Netzwerk zum Training der Eingangs-Parameter für das vorwärtsgerichtete neuronale Netzwerk und das vorwärtsgerichtete neuronale Netzwerk zur Berechnung der Grundlage für die Regelung der elektrischen Antriebsvorrichtung ermöglicht eine äußerst effiziente Nutzung der Ressourcen des Regelsystems sowie insbesondere eine Vermeidung von starken Schwankungen der Ergebnisse für die zumindest eine Betriebs-Kenngröße.

Anschaulich und beispielhaft beschrieben werden durch das rekurrente neuronale Netzwerk unterschiedliche Messungen von der elektrischen Antriebsvorrichtung, beispielsweise mit Telemetrie-Messtechnik zur Messungen der Rotortemperaturen und Thermoelementen zur Messungen von stationären Bauteiltemperaturen offline für das Training des rekurrenten neuronalen Netzwerks genutzt. Dieses rekurrente neuronale Netzwerk optimiert physikalische Parameter eines eingebetteten thermischen Netzwerks, indem beispielsweise die Zusammenhänge der Verluste, Wärmekapazitäten und Wärmewiderstände durch die Epochen des Trainings gelernt werden. Es müssen somit für das rekurrente neuronale Netzwerk bevorzugt keine expliziten Gleichungsparameter trainiert werden, wie beispielsweise Koeffizienten eines Polynoms für Reibungsverluste oder Eigenverluste, da das rekurrente neuronale Netzwerk diese Zusammenhänge in den Neuronen und/oder Netzebenen lernt, basierend auf den Eingangsgrößen des rekurrenten neuronalen Netzwerks.

Das rekurrente neuronale Netzwerk wird somit bevorzugt genutzt, um offline die Eingangs-Parameters für das vorwärtsgerichtete neuronale Netzwerk zu berechnen und zu lernen. In der zweiten Logikvorrichtung des Kraftfahrzeugs werden dann beispielhaft nur noch die Eingangs-Parameters des vorwärtsgerichteten neuronalen Netzwerks appliziert und daraus die zumindest eine Betriebs-Kenngröße berechnet. Das vorwärtsgerichtete neuronale Netzwerk ist bevorzugt in der Software des Kraftfahrzeugs implementiert.

Anschaulich und beispielhaft beschrieben werden die Eingangsgrößen für das rekurrente neuronale Netzwerk und die daraus berechneten Eingangs-Parameter für das vorwärtsgerichtete neuronale Netzwerk im Training und in der Applikation variiert und sind antriebsspezifisch zu wählen. Beispielsweise benötigt ein vorwärtsgerichtetes neuronales Netzwerk einer passiv gekühlten elektrischen Maschine mit einer Ölförderung über ein Getriebe andere berechnete Eingangs-Parameter als ein vorwärtsgerichtetes neuronales Netzwerk einer ölgekühlten elektrischen Maschine mittels Ölpumpe. Die Auswahl und Anzahl der Eingangsgrößen für das rekurrente neuronale Netzwerk und die daraus berechneten Eingangs-Parameter für das vorwärtsgerichtete neuronale Netzwerk sind in der Applikation und im Training variabel gestaltet.

Durch das erfindungsgemäße Regelverfahren wird bevorzugt die Anzahl der Eingangs-Parameter für die zweite Logikvorrichtung zur Berechnung der zumindest einen Betriebs-Kenngröße, beispielsweise in der Steuergeräte-Software des Kraftfahrzeugs, deutlich reduziert. Zum Berechnen von der zumindest einen Betriebs-Kenngröße sind keine oder zumindest weniger physikalische Parameter und Gleichungskoeffizienten nötig, da die berechneten Eingangs-Parameter aus dem rekurrenten neuronalen Netzwerk zur Berechnung herangezogen werden. Eine physikalische Abbildung der elektrischen Antriebsvorrichtung erfolgt bevorzugt durch eine sinnvolle Auswahl der Eingangsgrößen für das rekurrente neuronale Netzwerk, der Trainingsdaten sowie der Netztopologie.

Ein derart ausgestaltetes Regelverfahren ist besonders vorteilhaft, da das Regeln einer elektrischen Antriebsvorrichtung durch ein Regelsystem mit einem Kraftfahrzeug besonders einfach ermöglicht wird, wobei bevorzugt ein Rechenaufwand des Kraftfahrzeugs reduziert wird und/oder ein Regeln der elektrischen Antriebsvorrichtung verbessert wird.

Gemäß einer bevorzugten Weiterentwicklung der Erfindung kann bei einem Regelverfahren vorgesehen sein, dass die erste Logikvorrichtung des Regelsystems separat von dem Kraftfahrzeug und/oder als stationäre erste Logikvorrichtung ausgestaltet ist. Die erste Logikvorrichtung ist bevorzugt als eine Rechnervorrichtung, eine Servervorrichtung, ein Prüfstand und/oder ein Rechenzentrum zu verstehen. Die erste Logikvorrichtung ermöglicht ein Berechnen des zumindest einen Eingangs-Parameters. Die Eingangsgrößen der ersten Logikvorrichtung für das Berechnen des zumindest einen Eingangs-Parameters sind bevorzugt allgemein als Einflussgrößen für das thermische Verhalten und/oder für das Leistungsverhalten der elektrischen Antriebsvorrichtung zu verstehen und werden nachstehend noch detailliert beschrieben. Die Berechnungen des rekurrenten neuronalen Netzwerks durch die erste Logikvorrichtung umfassen bevorzugt ein Training und/oder Lernen von Parametern der elektrischen Antriebsvorrichtung. Ein derart ausgestaltetes Regelverfahren ist besonders vorteilhaft, da durch die Ausgestaltung der ersten Logikvorrichtung separat von dem Kraftfahrzeug und/oder als stationäre erste Logikvorrichtung das Regeln einer elektrischen Antriebsvorrichtung durch ein Regelsystem mit einem Kraftfahrzeug besonders einfach ermöglicht wird, wobei bevorzugt ein Rechenaufwand des Kraftfahrzeugs reduziert wird und/oder ein Regeln der elektrischen Antriebsvorrichtung verbessert wird.

Gemäß einer bevorzugten Weiterentwicklung der Erfindung kann bei einem Regelverfahren vorgesehen sein, dass das Regelverfahren ferner umfasst:
- Messen zumindest eines Antriebs-Parameters der elektrischen Antriebsvorrichtung des Kraftfahrzeugs durch eine Messvorrichtung des Regelsystems, und/oder
- Simulieren zumindest eines Antriebs-Parameters der elektrischen Antriebsvorrichtung des Kraftfahrzeugs, insbesondere durch die erste Logikvorrichtung,
wobei das Berechnen des zumindest einen Eingangs-Parameters und/oder das Berechnen von der zumindest einen Betriebs-Kenngröße (BK) der elektrischen Antriebsvorrichtung auf Grundlage des zumindest einen gemessenen und/oder simulierten Antriebs-Parameters erfolgt.

Die Eingangsgrößen der ersten Logikvorrichtung für das Berechnen des zumindest einen Eingangs-Parameters sind bevorzugt als praktische oder theoretische Messdaten der elektrischen Antriebsvorrichtung, beispielsweise einem Prüfstand und/oder einer Testfahrt des Kraftfahrzeugs, zu verstehen. Das rekurrente neuronale Netzwerk trainiert oder lernt durch die gemessenen oder simulierten Antriebs-Parameter das Leistungsverhalten und/oder thermische Verhalten der elektrischen Antriebsvorrichtung. Die Messvorrichtung ist bevorzugt als Sensorvorrichtung an der elektrischen Antriebsvorrichtung und/oder als ein Sensorsystem mit einer Vielzahl an Sensorvorrichtungen, beispielsweise in Form eines Prüfstandes, zu verstehen. Anschaulich und beispielhaft beschrieben werden mittels des rekurrenten neuronalen Netzwerks Messungen von der elektrischen Antriebsvorrichtung mit Telemetrie-Messtechnik und Thermoelementen offline für das Training des neuronalen Netzwerks genutzt. Die aus den gemessenen und/oder simulierten Antriebs-Parameter berechneten Eingangs-Parameter werden von dem vorwärtsgerichteten neuronalen Netzwerk mittels der zweiten Logikvorrichtung des Kraftfahrzeugs zu Betriebs-Kenngröße berechnet. Die Betriebs-Kenngrößen werden zum Regeln der elektrischen Antriebsvorrichtung durch eine Regelvorrichtung genutzt.

Bevorzugt erfolgt das Messen des zumindest eines Antriebs-Parameters zeitlich vorgelagert für ein offline Training des rekurrenten neuronalen Netzwerks statt. Der zumindest eine Antriebs-Parameter wird zusätzlich oder alternativ aus einer gesonderten Offline-Simulation, insbesondere eines thermischen Netzwerks, beispielsweise eines lumped parameter themal networks, bereitgestellt.

Bevorzugt werden die gemessenen und/oder simulierten Antriebs-Parameter zur Berechnung der zumindest einen Betriebs-Kenngröße durch die zweite Logikvorrichtung durch nachstehend beschriebene Kraftfahrzeugparameter zumindest teilweise ersetzt und/oder ergänzt. Dies findet bevorzugt bereits statt, bevor die zumindest eine Betriebs-Kenngröße für die anschließende Regelung der Antriebsvorrichtung berechnet wird.

Ein derart ausgestaltetes Regelverfahren ist besonders vorteilhaft, da durch das Messen und/oder Simulieren zumindest eines Antriebs-Parameters das Regeln einer elektrischen Antriebsvorrichtung durch ein Regelsystem mit einem Kraftfahrzeug besonders einfach ermöglicht wird, wobei bevorzugt ein Rechenaufwand des Kraftfahrzeugs reduziert wird und/oder ein Regeln der elektrischen Antriebsvorrichtung verbessert wird.

Gemäß einer bevorzugten Weiterentwicklung der Erfindung kann bei einem Regelverfahren vorgesehen sein, dass das Messen und/oder das Simulieren des zumindest einen Antriebs-Parameters ein Messen und/oder Simulieren zumindest einer der folgenden Werte umfasst:
- Eingangsstrom der elektrischen Antriebsvorrichtung,
- Drehzahl der elektrischen Antriebsvorrichtung,
- Kühlflüssigkeits-Temperatur der elektrischen Antriebsvorrichtung,
- Umgebungs-Temperatur der elektrischen Antriebsvorrichtung,
- Thermische Randbedingung der elektrischen Antriebsvorrichtung.

Wie voranstehend beschrieben sind die Eingangsgrößen der ersten Logikvorrichtung für das Berechnen des zumindest einen Eingangs-Parameters bevorzugt allgemein als Einflussgrößen für das thermische Verhalten und/oder für das Leistungsverhalten der elektrischen Antriebsvorrichtung zu verstehen. Die angeführten Antriebs-Parameter stellen bevorzugt Messdaten und/oder Simulationsgrößen dar, um eine vorteilhafte Berechnung des zumindest einen Eingangs-Parameters für das vorwärtsgerichtete neuronale Netzwerk zu berechnen. Bevorzugt ist die Sensorik und die Logikvorrichtung zum Messen und/oder Simulieren dieser Eingangsgrößen nur für die Bereitstellung der Eingangsgrößen für das rekurrente neuronale Netzwerk und somit bevorzugt nicht mehr an dem Kraftfahrzeug notwendig.

Alternativ oder zusätzlich umfasst das erfindungsgemäße Regelverfahren ein Messen und/oder Simulieren zumindest eines Hotspots der elektrischen Antriebsvorrichtung. Insbesondere umfasst das erfindungsgemäße Regelverfahren ein Messen und/oder Simulieren zumindest eines Hotspots auf beiden Wickelkopfseiten einer permanent erregten Synchronmaschine und/oder zumindest eines Hotspots in einem Rotor, insbesondere im heißesten Magneten des Rotors, der elektrischen Antriebsvorrichtung. Beispielhaft umfasst das erfindungsgemäße Regelverfahren ein Messen und/oder Simulieren der heißesten Rotorwicklung bei einer fremderregten Synchronmaschine und/oder des heißesten Kurzschlussstabs einer Asynchronmaschine.

Ein derart ausgestaltetes Regelverfahren ist besonders vorteilhaft, da durch das Messen und/oder Simulieren zumindest eines angeführten Antriebs-Parameters das Regeln einer elektrischen Antriebsvorrichtung durch ein Regelsystem mit einem Kraftfahrzeug besonders einfach ermöglicht wird, wobei bevorzugt ein Rechenaufwand des Kraftfahrzeugs reduziert wird und/oder ein Regeln der elektrischen Antriebsvorrichtung verbessert wird.

Gemäß einer bevorzugten Weiterentwicklung der Erfindung kann bei einem Regelverfahren vorgesehen sein, dass das Berechnen der zumindest einen Betriebs-Kenngröße ein Berechnen zumindest eines praktischen und/oder theoretischen Betriebs-Kenngröße umfasst, insbesondere zumindest einer der folgenden Kenngrößen:
- Maximalwert einer Temperatur der elektrischen Antriebsvorrichtung,
- Mittelwert einer Temperatur der elektrischen Antriebsvorrichtung,
- Maximalwert einer Leistung der elektrischen Antriebsvorrichtung,
- Mittelwert einer Leistung der elektrischen Antriebsvorrichtung.

Ein Vorteil des Berechnens der Eingangs-Parameter durch das rekurrente neuronale Netzwerk für das vorwärtsgerichtete neuronale Netzwerk besteht darin, dass sowohl praktische als auch theoretische Betriebs-Kenngrößen berechnet werden können. Die Eingangs-Parameter werden genutzt um die Betriebskenngrößen durch das vorwärtsgerichtete neuronale Netzwerk zu berechnen. Als praktische Betriebs-Kenngröße ist im Rahmen der Erfindung beispielsweise ein Temperaturwert eines Hotspots der elektrischen Antriebsvorrichtung zu verstehen, der zwischen zwei Messwerten interpoliert wird. Diese praktische Betriebs-Kenngröße ist bevorzugt physisch an der elektrischen Antriebsmaschine messbar und/oder reproduzierbar. Als theoretische Betriebs-Kenngröße ist hingegen im Rahmen der Erfindung beispielsweise ein Mittelwert einer Temperaturverteilung eines Bauteils der elektrischen Antriebsvorrichtung zu verstehen, wobei dieser Mittelwert der Temperatur in der Realität nicht zwingend irgendwo an diesem Bauteil messbar ist. Die theoretische Betriebs-Kenngröße stellt somit nicht zwingend reale Bedingungen oder Verhältnisse der elektrischen Antriebsvorrichtung dar, sondern explizit eine theoretische Betriebs-Kenngröße, die für eine vorteilhafte weitere Berechnung durch das vorwärtsgerichtete neuronale Netzwerk und/oder das Regeln der elektrischen Antriebsvorrichtung optimiert sind. Die theoretische Betriebs-Kenngröße stellt bevorzugt eine Vereinfachung eines physikalischen Sachverhalts dar, die ausreichend exakt ist, die eine weitere Berechnung deutlich einfacher ermöglicht und/oder die eine Regelung der elektrischen Antriebsvorrichtung vereinfacht. Bevorzugt umfasst das Regelverfahren ein Berechnen eines Temperatur Mittelwerts für ein Statoreisen und/oder einen Rotor der elektrischen Antriebsvorrichtung.

Anschaulich und beispielhaft formuliert ist eine große Stärke des rekurrenten neuronalen Netzwerks die eigenständige Abstraktion der Wärmeübertragungs-Zusammenhänge von Max.-Knoten und fiktiven Mittelwert-Knoten - vorausgesetzt, dass eine ausreichende Datenbasis zur Verfügung steht. Traditionelle Knotennetzwerke können theoretisch auch dieses fiktiven Mittelwert-Knoten berechnen; die Parametrierung ist jedoch erheblich aufwändiger, da der abstrahierte Zusammenhang über vorgegebene Kennfeldeinträge abzubilden ist. Gerade bei der Optimierung mehrerer Zielknoten, insbesondere der Max.- und Mittelwert-Knoten, kommen klassische Optimierer bei ungeeigneten Suchintervallen und Startparametern schnell an ihre Grenzen. Die neuronalen Netzwerke sind nicht an die fixen Kennfeldeinträge gebunden und können die funktionalen Zusammenhänge durch eine TNN-Architektur zielgerichtet approximieren.

Die Erzeugung von Mittelwerten und/oder Maximalwerten wird bevorzugt dadurch gewährleistet, dass die Mittelwert-Temperatur aus einzelnen Sensormesswerten der betreffenden Komponente abgeleitet wird. Diese zusätzliche Größe ist ein Label, auf welches das neuronalen Netzwerk bevorzugt zusätzlich zum Max.-Wert trainiert wird. Einfach gesagt wird ein zusätzliches Prädiktionsziel aus den Messwerten generiert und hinzugefügt. Das TNN-Modell bekommt so einen zusätzlichen Temperaurknoten; alle entsprechenden Wärmeübertragungsparameter werden bevorzugt automatisch im Training identifiziert.

Mit anderen Worten sollen die Max.-Werte bevorzugt die Komponenten-Hot-Spots abbilden, um die thermischen Grenztemperaturen abzusichern. Hier liegt der Fokus auf dem Bauteilschutz und die Temperaturen gehen in eine übergeordnete Derating-Strategie. Die Mittelwerte hingegen sollen bevorzugt Effektivwerte darstellen, welche die Regelung der elektrischen Antriebsvorrichtung verbessern. Die Temperaturabhängigkeit der elektromagnetischen Parameter kann durch geeignete Kompensationsmaßnahmen, wie beispielsweise einer Flussnachführung, adaptiert werden. So verbessert sich das Drehmomentmodell und entsprechend auch die Effizienz durch das erfindungsgemäße Regelverfahren.

Die Auftrennung der Temperaturen bewirkt somit eine Verbesserung der übergeordneten Teilfunktionen, deren Eingangsgrößen die Temperaturen sind.

Ein derart ausgestaltetes Regelverfahren ist besonders vorteilhaft, da durch das Berechnen zumindest einer praktischen und/oder theoretischen Betriebs-Kenngröße das Regeln einer elektrischen Antriebsvorrichtung durch ein Regelsystem mit einem Kraftfahrzeug besonders einfach ermöglicht wird, wobei bevorzugt ein Rechenaufwand des Kraftfahrzeugs reduziert wird und/oder ein Regeln der elektrischen Antriebsvorrichtung verbessert wird.

Gemäß einer bevorzugten Weiterentwicklung der Erfindung kann bei einem Regelverfahren vorgesehen sein, dass das Berechnen des zumindest eines Eingangs-Parameters als zeitlich abgeschlossene Vorabberechnungen erfolgt und/oder,
dass das Berechnen von der zumindest einen Betriebs-Kenngröße und das Regeln der elektrischen Antriebsvorrichtung während eines Betriebs des Kraftfahrzeugs erfolgt.

Das erfindungsgemäße Regelverfahren ist besonders vorteilhaft, wenn das Berechnen des zumindest eines Eingangs-Parameters zeitlich vorab erfolgt und beispielsweise als abgeschlossener Training-Datensatz an die zweite Logikvorrichtung und das vorwärtsgerichtete neuronale Netzwerk übertragen wird. Der gesamte Rechenaufwand des rekurrenten neuronalen Netzwerks und der ersten Logikvorrichtung wird somit vorteilhaft ausgelagert. Das Kraftfahrzeug, insbesondere die Logikvorrichtungen des Kraftfahrzeugs, werden somit vorteilhaft nicht von diesem Rechenaufwand belastet und können ferner direkt mit den berechneten Eingangs-Parametern aus dem rekurrenten neuronalen Netzwerk arbeiten.

Das vorwärtsgerichtete neuronale Netzwerk wird bevorzugt durch die zweite Logikvorrichtung des Kraftfahrzeugs während des Betriebs des Kraftfahrzeugs ausgeführt und berechnet die zumindest eine Betriebs-Kenngröße der elektrischen Antriebsvorrichtung auf Grundlage des zumindest einen theoretischen Eingangs-Parameters. Die Berechnungen des vorwärtsgerichteten neuronalen Netzwerks und der zweiten Logikvorrichtung erfolgen bevorzugt live und/oder in Echtzeit während des Betriebs des Kraftfahrzeugs. Ein derart ausgestaltetes Regelverfahren ist besonders vorteilhaft, da durch die Ausgestaltung des Berechnens des zumindest einen Eingangs-Parameters und/oder der zumindest einen Betriebs-Kenngröße das Regeln einer elektrischen Antriebsvorrichtung durch ein Regelsystem mit einem Kraftfahrzeug besonders einfach ermöglicht wird, wobei bevorzugt ein Rechenaufwand des Kraftfahrzeugs reduziert wird und/oder ein Regeln der elektrischen Antriebsvorrichtung verbessert wird.

Gemäß einer bevorzugten Weiterentwicklung der Erfindung kann bei einem Regelverfahren vorgesehen sein, dass die zweite Logikvorrichtung des Regelsystems innerhalb des Kraftfahrzeugs und/oder als Steuergerät des Kraftfahrzeugs ausgestaltet ist.

Die Ausgestaltung der zweiten Logikvorrichtung innerhalb des Kraftfahrzeugs und/oder als Steuergerät des Kraftfahrzeugs stellt eine vorteilhafte Nutzung von vorhandenen Ressourcen dar und ermöglicht besonders bevorzugt die zuvor beschriebene Ausführung der Berechnungen des vorwärtsgerichteten neuronalen Netzwerks und der zweiten Logikvorrichtung erfolgen bevorzugt live und/oder in Echtzeit während des Betriebs des Kraftfahrzeugs. Die Ausgestaltung der zweiten Logikvorrichtung innerhalb des Kraftfahrzeugs und/oder als Steuergerät des Kraftfahrzeugs ermöglicht ferner eine vorteilhafte Funktionssynergie mit einer nachstehend beschriebenen Verwendung weiterer Kraftfahrzeugparameter für die Berechnung von der zumindest einen Betriebs-Kenngröße und/oder das Regeln der elektrischen Antriebsvorrichtung. Ein derart ausgestaltetes Regelverfahren ist besonders vorteilhaft, da durch die Ausgestaltung der zweiten Logikvorrichtung das Regeln einer elektrischen Antriebsvorrichtung durch ein Regelsystem mit einem Kraftfahrzeug besonders einfach ermöglicht wird, wobei bevorzugt ein Rechenaufwand des Kraftfahrzeugs reduziert wird und/oder ein Regeln der elektrischen Antriebsvorrichtung verbessert wird.

Gemäß einer bevorzugten Weiterentwicklung der Erfindung kann bei einem Regelverfahren vorgesehen sein, dass das Berechnen der zumindest einen Betriebs-Kenngröße rekursiv und/oder iterativ erfolgt. Anschaulich und beispielhaft formuliert fließt eine berechnete Betriebs-Kenngröße bevorzugt in eine zeitlich nachgeordnete Berechnung einer weiteren Betriebs-Kenngröße ein. Die beiden zeitlich versetzten Betriebs-Kenngrößen können dabei die gleiche Betriebs-Kenngröße oder unterschiedliche Betriebs-Kenngrößen sein. Ein derart ausgestaltetes Regelverfahren ist besonders vorteilhaft, da durch die Ausgestaltung des Berechnens der zumindest einen Betriebs-Kenngröße das Regeln einer elektrischen Antriebsvorrichtung durch ein Regelsystem mit einem Kraftfahrzeug besonders einfach ermöglicht wird, wobei bevorzugt ein Rechenaufwand des Kraftfahrzeugs reduziert wird und/oder ein Regeln der elektrischen Antriebsvorrichtung verbessert wird.

Gemäß einer bevorzugten Weiterentwicklung der Erfindung kann bei einem Regelverfahren vorgesehen sein, dass das Regelverfahren ferner umfasst:
- Bereitstellen von zumindest einem Kraftfahrzeugparameter durch eine Schnittstellenvorrichtung des Kraftfahrzeugs an die zweite Logikvorrichtung und/oder die Regelvorrichtung, wobei das Berechnen von der zumindest einen Betriebs-Kenngröße und/oder das Regeln der elektrischen Antriebsvorrichtung zusätzlich auf Grundlage des zumindest einen bereitgestellten Kraftfahrzeugparameters erfolgt.

Die zweite Logikvorrichtung ist erfindungsgemäß als Bestandteil des Kraftfahrzeugs definiert. Eine Bereitstellung und Verwendung zumindest eines Kraftfahrzeugparameters für das Berechnen von der zumindest einen Betriebs-Kenngröße und/oder das Regeln der elektrischen Antriebsvorrichtung stellt eine vorteilhafte Ausnutzung von vorhandenen Ressourcen und Informationen dar. Beispielsweise ist die zweite Logikvorrichtung, wie voranstehend ausgeführt, als Steuergerät ausgestaltet. Das Steuergerät, insbesondere das Steuergerät der elektrischen Antriebsvorrichtung, umfasst bereits eine Vielzahl an Daten und/oder Signalen zur Zustandsüberwachung, Regelung und/oder Steuerung der elektrischen Antriebsvorrichtung. Eine Integration dieser Kraftfahrzeugparameter in das erfindungsgemäße Regelverfahren über die Schnittstellenvorrichtung stellt folglich eine vorteilhafte Ergänzung des Funktionsumfangs des Regelverfahrens und/oder Regelsystems dar. Ein derart ausgestaltetes Regelverfahren ist besonders vorteilhaft, da durch die Schnittstellenvorrichtung das Regeln einer elektrischen Antriebsvorrichtung durch ein Regelsystem mit einem Kraftfahrzeug besonders einfach ermöglicht wird, wobei bevorzugt ein Rechenaufwand des Kraftfahrzeugs reduziert wird und/oder ein Regeln der elektrischen Antriebsvorrichtung verbessert wird.

Gemäß einem zweiten Aspekt der Erfindung wird die Aufgabe durch ein Regelsystem, umfassend eine erste Logikvorrichtung und ein Kraftfahrzeug mit einer zweiten Logikvorrichtung und einer Regelvorrichtung gelöst. Das Regelsystem ist zum Ausführen des Regelverfahrens gemäß dem ersten Aspekt ausgestaltet. Bei dem beschriebenen Regelsystem ergeben sich sämtliche Vorteile, die bereits zu dem Regelverfahren gemäß dem ersten Aspekt der Erfindung beschrieben worden sind. Bevorzugt ist die erste Logikvorrichtung, wie voranstehend beschrieben, von dem Kraftfahrzeug separat ausgestaltet. Bevorzugt ist die zweite Logikvorrichtung, wie voranstehend beschrieben, als Bestandteil des Kraftfahrzeugs ausgestaltet.

Gemäß einem dritten Aspekt der Erfindung wird die Aufgabe durch ein Computerprogrammprodukt zum Regeln einer elektrischen Antriebsvorrichtung durch ein Regelsystem mit einem Kraftfahrzeug gelöst. Das Computerprogrammprodukt umfasst Befehle, die bewirken, dass das Regelsystem gemäß dem zweiten Aspekt die Verfahrensschritte gemäß dem ersten Aspekt ausführt. Bei dem beschriebenen Computerprogrammprodukt ergeben sich sämtliche Vorteile, die bereits zu dem Regelverfahren gemäß dem ersten Aspekt der Erfindung und/oder zu dem Regelsystem gemäß dem zweiten Aspekt der Erfindung beschrieben worden sind.

Das Computerprogrammprodukt ist bevorzugt als computerlesbarer Anweisungscode in jeder geeigneten Programmiersprache, wie beispielsweise in JAVA, C++, C# und/oder Python, implementiert. Das Computerprogrammprodukt ist bevorzugt auf einem computerlesbaren Speichermedium wie einer Datendisk, einem Wechsellaufwerk, einem flüchtigen oder nichtflüchtigen Speicher, oder einem eingebauten Speicher/Prozessor abgespeichert. Der Anweisungscode beeinflusst oder steuert einen Computer oder andere programmierbare Geräte wie eine Rechnereinheit eines Regelsystems bevorzugt derart, dass die Befehle ausgeführt werden. Ferner ist das Computerprogrammprodukt bevorzugt in einem Netzwerk wie beispielsweise dem Internet bereitstellbar. Das Computerprogrammprodukt ist bevorzugt sowohl mittels einer Software, als auch mittels einer oder mehrerer spezieller elektronischer Schaltungen, d.h. in Hardware oder in beliebig hybrider Form, d.h. mittels Software-Komponenten und Hardware-Komponenten, realisiert.

Gemäß einem vierten Aspekt der Erfindung wird die Aufgabe durch ein computerlesbares Medium auf dem das Computerprogrammprodukt gemäß dem dritten Aspekt gespeichert ist gelöst. Bei dem beschriebenen computerlesbaren Medium ergeben sich sämtliche Vorteile, die bereits zu dem Regelverfahren gemäß dem ersten Aspekt der Erfindung, zu dem Regelsystem gemäß dem zweiten Aspekt der Erfindung und/oder zu dem Computerprogrammprodukt gemäß dem dritten Aspekt der Erfindung beschrieben worden sind.

Ein erfindungsgemäßes Regelverfahren, ein Regelsystem, ein Computerprogrammprodukt sowie ein computerlesbares Medium werden nachfolgend anhand von Zeichnungen näher erläutert. Es zeigen jeweils schematisch:
- Figur 1: in einer Seitenansicht ein Regelsystem mit einer ersten Logikvorrichtung und einem Kraftfahrzeug,
- Figur 2: in einer Funktionsansicht ein weiteres Regelsystem mit einer ersten Logikvorrichtung und einem Kraftfahrzeug,
- Figur 3: in einem Flussdiagramm eine erfindungsgemäße Ausgestaltung des Regelverfahrens, und
- Figur 4: in einer Funktionsansicht ein computerlesbares Medium mit einem Computerprogrammprodukt.

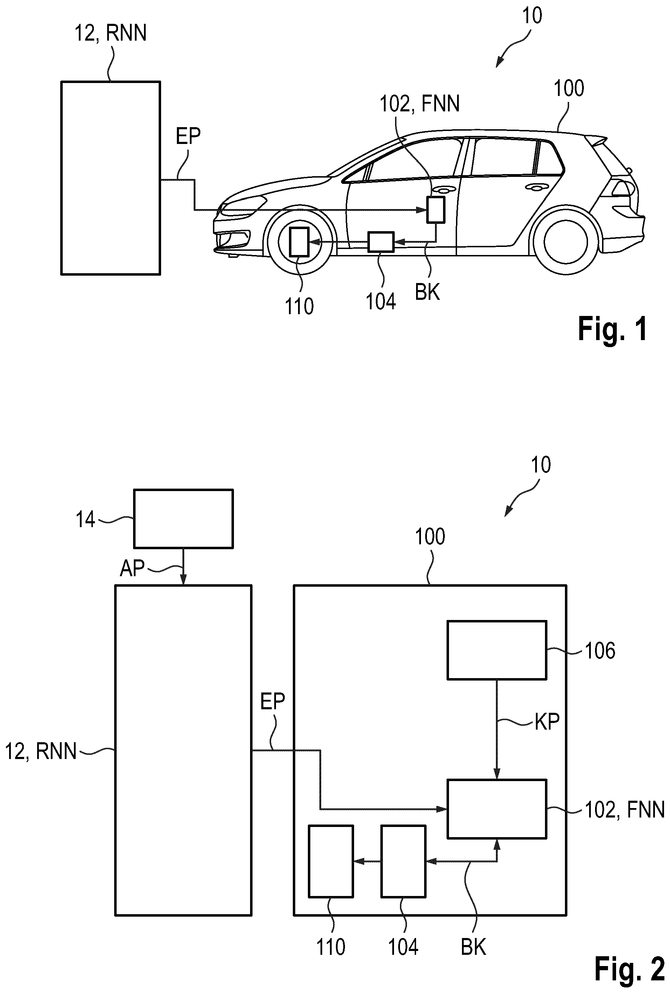

Elemente mit gleicher Funktion und Wirkungsweise sind in den Fig. 1 bis 4 jeweils mit denselben Bezugszeichen versehen.

In Fig. 1 ist schematisch in einer Seitenansicht ein Regelsystem 10 mit einer ersten Logikvorrichtung 12 und einem Kraftfahrzeug 100 gezeigt. Für eine verbesserte Übersichtlichkeit sind in Fig. 1 die Bezugszeichen der Verfahrensschritte nicht angegeben. Das Kraftfahrzeug 100 umfasst eine elektrische Antriebsvorrichtung 110, eine zweite Logikvorrichtung 102 und eine Regelvorrichtung 104. Die erste Logikvorrichtung 12 ist zum Berechnen 202 zumindest eines Eingangs-Parameters EP der elektrischen Antriebsvorrichtung 110 mittels eines rekurrenten neuronalen Netzwerks RNN ausgestaltet. Die zweite Logikvorrichtung 102 ist zum Berechnen 204 von zumindest einer Betriebs-Kenngröße BK der elektrischen Antriebsvorrichtung 110 auf Grundlage des zumindest einen theoretischen Eingangs-Parameters EP mittels eines vorwärtsgerichteten neuronalen Netzwerks FNN ausgestaltet. Die Regelvorrichtung 104 ist zum Regeln 206 der elektrischen Antriebsvorrichtung 110 auf Grundlage der berechneten zumindest einen Betriebs-Kenngröße BK ausgestaltet. Die erste Logikvorrichtung 12 des Regelsystems 10 ist separat von dem Kraftfahrzeug 100 und als stationäre erste Logikvorrichtung 12 ausgestaltet

In Fig. 2 ist schematisch in einer Funktionsansicht ein weiteres Regelsystem 10 mit einer ersten Logikvorrichtung 12 und einem Kraftfahrzeug 100 gezeigt. Für eine verbesserte Übersichtlichkeit sind in Fig. 2 die Bezugszeichen der Verfahrensschritte nicht angegeben. Das Kraftfahrzeug 100 umfasst eine elektrische Antriebsvorrichtung 110, eine zweite Logikvorrichtung 102 und eine Regelvorrichtung 104. Die erste Logikvorrichtung 12 ist zum Berechnen 202 zumindest eines Eingangs-Parameters EP der elektrischen Antriebsvorrichtung 110 mittels eines rekurrenten neuronalen Netzwerks RNN ausgestaltet. Die zweite Logikvorrichtung 102 ist zum Berechnen 204 von zumindest einer Betriebs-Kenngröße BK der elektrischen Antriebsvorrichtung 110 auf Grundlage des zumindest einen theoretischen Eingangs-Parameters EP mittels eines vorwärtsgerichteten neuronalen Netzwerks FNN ausgestaltet. Die Regelvorrichtung 104 ist zum Regeln 206 der elektrischen Antriebsvorrichtung 110 auf Grundlage der berechneten zumindest einen Betriebs-Kenngröße BK ausgestaltet. Das Regelsystem 10 umfasst ferner eine Messvorrichtung 14, die zum Messen 208 zumindest eines Antriebs-Parameters AP der elektrischen Antriebsvorrichtung 110 des Kraftfahrzeugs 100 ausgestaltet ist. Das Regelsystem 10 ist ferner zum Simulieren 210 zumindest eines Antriebs-Parameters AP der elektrischen Antriebsvorrichtung 110 des Kraftfahrzeugs 100 ausgestaltet, hier durch eine durch Offline-Simulation eines thermischen Netzwerks durch das Regelsystem 10. Das Berechnen 202 des zumindest einen Eingangs-Parameters EP erfolgt auf Grundlage des zumindest einen gemessenen und/oder simulierten Antriebs-Parameters AP. Das Berechnen 202 des zumindest eines Eingangs-Parameters EP erfolgt als zeitlich abgeschlossene Vorabberechnungen und das Berechnen 204 von der zumindest einen Betriebs-Kenngröße BK und das Regeln 206 der elektrischen Antriebsvorrichtung 110 erfolgt während eines Betriebs des Kraftfahrzeugs 100. Die zweite Logikvorrichtung 102 des Regelsystems 10 ist innerhalb des Kraftfahrzeugs 100 als Steuergerät des Kraftfahrzeugs 100 ausgestaltet.

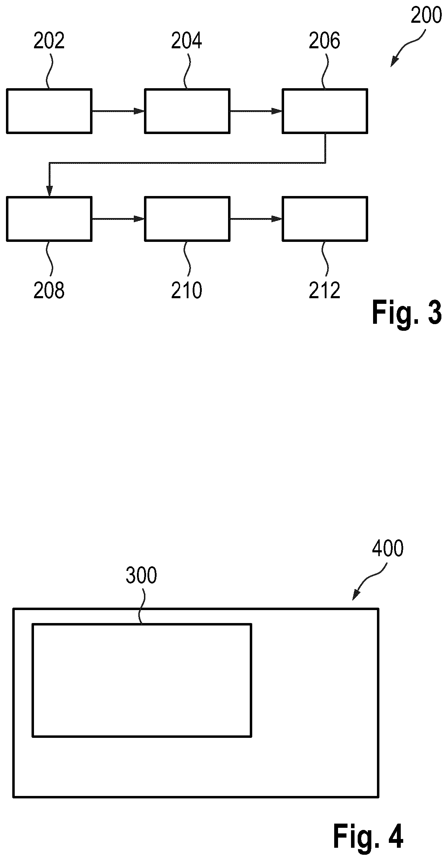

In Fig. 3 ist schematisch in einem Flussdiagramm eine erfindungsgemäße Ausgestaltung des Regelverfahrens 200 gezeigt. Für eine verbesserte Übersichtlichkeit sind in Fig. 3 nur die Bezugszeichen der Verfahrensschritte angegeben. Das Regelverfahren 200 umfasst in einem ersten Verfahrensschritt das Berechnen 202 zumindest eines Eingangs-Parameters EP der elektrischen Antriebsvorrichtung 110 mittels eines rekurrenten neuronalen Netzwerks RNN einer ersten Logikvorrichtung 12 des Regelsystems 10. Das Regelverfahren 200 umfasst in einem weiteren Verfahrensschritt das Berechnen 204 von zumindest einer Betriebs-Kenngröße BK der elektrischen Antriebsvorrichtung 110 auf Grundlage des zumindest einen theoretischen Eingangs-Parameters EP mittels eines vorwärtsgerichteten neuronalen Netzwerks FNN einer zweiten Logikvorrichtung 102 des Kraftfahrzeugs 100 des Regelsystems 10. Das Regelverfahren 200 umfasst in einem weiteren Verfahrensschritt das Regeln 206 der elektrischen Antriebsvorrichtung 110 durch eine Regelvorrichtung 104 des Kraftfahrzeugs 100 auf Grundlage der berechneten zumindest einen Betriebs-Kenngröße BK. Das Regelverfahren 200 umfasst in einem weiteren Verfahrensschritt das Messen 208 zumindest eines Antriebs-Parameters AP der elektrischen Antriebsvorrichtung 110 des Kraftfahrzeugs 100 durch eine Messvorrichtung 14 des Regelsystems 10 und/oder das Simulieren 210 zumindest eines Antriebs-Parameters AP der elektrischen Antriebsvorrichtung 110 des Kraftfahrzeugs 100, wobei das Berechnen 202 des zumindest einen Eingangs-Parameters EP und/oder das Berechnen 204 von der zumindest einen Betriebs-Kenngröße BK der elektrischen Antriebsvorrichtung 110 auf Grundlage des zumindest einen gemessenen und/oder simulierten Antriebs-Parameters AP erfolgt. Der simulierte Antriebs-Parameter AP wird durch eine Offline-Simulation des Regelverfahrens 200 bereitgestellt. Das Regelverfahren 200 umfasst in einem weiteren Verfahrensschritt das Bereitstellen 212 von zumindest einem Kraftfahrzeugparameter KP durch eine Schnittstellenvorrichtung 106 des Kraftfahrzeugs 100 an die zweite Logikvorrichtung 102 und/oder die Regelvorrichtung 104, wobei das Berechnen 204 von der zumindest einen Betriebs-Kenngröße BK und/oder das Regeln 206 der elektrischen Antriebsvorrichtung 110 zusätzlich auf Grundlage des zumindest einen bereitgestellten Kraftfahrzeugparameters KP erfolgt.

In Fig. 4 ist schematisch in einer Funktionsansicht ein computerlesbares Medium 400 mit einem Computerprogrammprodukt 300 gezeigt. Das Computerprogrammprodukt 300 ist auf dem computerlesbaren Medium 400 gespeichert. Das Computerprogrammprodukt 300 ist zum Regeln einer elektrischen Antriebsvorrichtung 110 (nicht gezeigt) durch ein Regelsystem 10 (nicht gezeigt) mit einem Kraftfahrzeug 100 (nicht gezeigt) ausgestaltet. Das Computerprogrammprodukt 300 umfasst Befehle, die bewirken, dass das Regelsystem 10 (nicht gezeigt) die Verfahrensschritte des Regelverfahrens 200 (nicht gezeigt) ausführt.

### Bezugszeichenliste

- 10: Regelsystem
- 12: Logikvorrichtung
- 14: Messvorrichtung

- 100: Kraftfahrzeug
- 102: zweite Logikvorrichtung
- 104: Regelvorrichtung
- 106: Schnittstellenvorrichtung

- 110: Antriebsvorrichtung

- 200: Regelverfahren
- 202: Berechnen
- 204: Berechnen
- 206: Regeln
- 208: Messen
- 210: Simulieren
- 212: Bereitstellen

- 300: Computerprogrammprodukt
- 400: Computerlesbares Medium

- AP: Antriebs-Parameter
- BK: Betriebs-Kenngröße
- EP: Eingangs-Parameter
- KP: Kraftfahrzeugparameter
- FNN: vorwärtsgerichtetes neuronales Netzwerk
- RNN: rekurrentes neuronales Netzwerk

## Patentansprüche

1. Regelverfahren (200) zum Regeln einer elektrischen Antriebsvorrichtung (110) durch ein Regelsystem (10) mit einem Kraftfahrzeug (100), das Regelverfahren (200) umfassend:
- Berechnen (202) zumindest eines Eingangs-Parameters (EP) der elektrischen Antriebsvorrichtung (110) mittels eines rekurrenten neuronalen Netzwerks (RNN) einer ersten Logikvorrichtung (12) des Regelsystems (10),
- Berechnen (204) von zumindest einer Betriebs-Kenngröße (BK) der elektrischen Antriebsvorrichtung (110) auf Grundlage des zumindest einen theoretischen Eingangs-Parameters (EP) mittels eines vorwärtsgerichteten neuronalen Netzwerks (FNN) einer zweiten Logikvorrichtung (102) des Kraftfahrzeugs (100) des Regelsystems (10),
- Regeln (206) der elektrischen Antriebsvorrichtung (110) durch eine Regelvorrichtung (104) des Kraftfahrzeugs (100) auf Grundlage der berechneten zumindest einen Betriebs-Kenngröße (BK).

2. Regelverfahren (200) nach Anspruch 1,
**dadurch gekennzeichnet,**
**dass** die erste Logikvorrichtung (12) des Regelsystems (10) separat von dem Kraftfahrzeug (100) und/oder als stationäre erste Logikvorrichtung (12) ausgestaltet ist.

3. Regelverfahren (200) nach einem der voranstehenden Ansprüche,
**dadurch gekennzeichnet,**
**dass** das Regelverfahren (200) ferner umfasst:
- Messen (208) zumindest eines Antriebs-Parameters (AP) der elektrischen Antriebsvorrichtung (110) des Kraftfahrzeugs (100) durch eine Messvorrichtung (14) des Regelsystems (10), und/oder
- Simulieren (210) zumindest eines Antriebs-Parameters (AP) der elektrischen Antriebsvorrichtung (110) des Kraftfahrzeugs (100), insbesondere durch die erste Logikvorrichtung (12),
wobei das Berechnen (202) des zumindest einen Eingangs-Parameters (EP) und/oder das Berechnen (204) von der zumindest einen Betriebs-Kenngröße (BK) der elektrischen Antriebsvorrichtung (110) auf Grundlage des zumindest einen gemessenen und/oder simulierten Antriebs-Parameters (AP) erfolgt.

4. Regelverfahren (200) nach Anspruch 3,
**dadurch gekennzeichnet,**
**dass** das Messen (208) und/oder das Simulieren (210) des zumindest einen Antriebs-Parameters (AP) ein Messen (208) und/oder Simulieren (210) zumindest einer der folgenden Werte umfasst:
- Eingangsstrom der elektrischen Antriebsvorrichtung (110),
- Drehzahl der elektrischen Antriebsvorrichtung (110),
- Kühlflüssigkeits-Temperatur der elektrischen Antriebsvorrichtung (110),
- Umgebungs-Temperatur der elektrischen Antriebsvorrichtung (110),
- Thermische Randbedingung der elektrischen Antriebsvorrichtung (110).

5. Regelverfahren (200) nach einem der voranstehenden Ansprüche,
**dadurch gekennzeichnet,**
**dass** das Berechnen (204) der zumindest einen Betriebs-Kenngröße (BK) ein Berechnen zumindest eines praktischen und/oder theoretischen Betriebs-Kenngröße (BK) umfasst, insbesondere zumindest einer der folgenden Betriebs-Kenngrößen (BK):
- Maximalwert einer Temperatur der elektrischen Antriebsvorrichtung (110),
- Mittelwert einer Temperatur der elektrischen Antriebsvorrichtung (110),
- Maximalwert einer Leistung der elektrischen Antriebsvorrichtung (110),
- Mittelwert einer Leistung der elektrischen Antriebsvorrichtung (110).

6. Regelverfahren (200) nach einem der voranstehenden Ansprüche,
**dadurch gekennzeichnet,**
**dass** das Berechnen (202) des zumindest eines Eingangs-Parameters (EP) als zeitlich abgeschlossene Vorabberechnungen erfolgt und/oder,
**dass** das Berechnen (204) von der zumindest einen Betriebs-Kenngröße (BK) und das Regeln (206) der elektrischen Antriebsvorrichtung (110) während eines Betriebs des Kraftfahrzeugs (100) erfolgt.

7. Regelverfahren (200) nach einem der voranstehenden Ansprüche,
**dadurch gekennzeichnet,**
**dass** die zweite Logikvorrichtung (102) des Regelsystems (10) innerhalb des Kraftfahrzeugs (100) und/oder als Steuergerät des Kraftfahrzeugs (100) ausgestaltet ist.

8. Regelverfahren (200) nach einem der voranstehenden Ansprüche,
**dadurch gekennzeichnet,**
**dass** das Berechnen (204) der zumindest einen Betriebs-Kenngröße (BK) rekursiv und/oder iterativ erfolgt.

9. Regelverfahren (200) nach einem der voranstehenden Ansprüche,
**dadurch gekennzeichnet,**
**dass** das Regelverfahren (200) ferner umfasst:
- Bereitstellen (212) von zumindest einem Kraftfahrzeugparameter (KP) durch eine Schnittstellenvorrichtung (106) des Kraftfahrzeugs (100) an die zweite Logikvorrichtung (102) und/oder die Regelvorrichtung (104), wobei das Berechnen (204) von der zumindest einen Betriebs-Kenngröße (BK) und/oder das Regeln (206) der elektrischen Antriebsvorrichtung (110) zusätzlich auf Grundlage des zumindest einen bereitgestellten Kraftfahrzeugparameters (KP) erfolgt.

10. Regelsystem (10), umfassend eine erste Logikvorrichtung (12) und ein Kraftfahrzeug (100) mit einer zweiten Logikvorrichtung (102) und einer Regelvorrichtung (104), **dadurch gekennzeichnet,**
**dass** das Regelsystem (10) zum Ausführen des Regelverfahrens (200) nach einem der voranstehenden Ansprüche ausgestaltet ist.

11. Computerprogrammprodukt (300) zum Regeln einer elektrischen Antriebsvorrichtung (110) durch ein Regelsystem (10) mit einem Kraftfahrzeug (100),
**dadurch gekennzeichnet,**
**dass** das Computerprogrammprodukt (300) Befehle umfasst, die bewirken, dass das Regelsystem (10) gemäß Anspruch 10 die Verfahrensschritte nach einem der Ansprüche 1 bis 9 ausführt.

12. Computerlesbares Medium (400), auf dem das Computerprogrammprodukt (300) nach Anspruch 11 gespeichert ist.
